# EUROPEAN PATENT APPLICATION

(11) **EP 0 808 569 A1**
(43) Date of publication of application: **26.11.1997**
(21) Application number: 96870067.4
(22) Date of filing: 24.05.1996
(51) Int. Cl.: A01N 57/20

(54) **New herbicidal compositions and use thereof**

(71) Applicant: MONSANTO EUROPE S.A., B-1150 Brussels (BE)
(72) Inventor: Brants, Ivo, B-3818 Nieuwerkerken (BE); Graham, William, B-3078 Kortenberg (BE)
(74) Representative: Bosch, Henry A.

(57) **Abstract**

The invention is concerned with a herbicidal composition comprising :
(i) at least one herbicide selective against beet crops, selected from triflusulfuron, metamitron, chloridazon, lenacil, and clopyralid;
(ii) glyphosate herbicide; and possibly
(iii) an appropriate surface active component,
the respective constituents of the composition being present in amounts such that the composition displays selectivity to the treated crop and exhibits synergistic effects, for the control of weeds and glyphosate tolerant volunteers in another glyphosate tolerant crop, such as a beet crop.

## Description

The present invention concerns new herbicidal compositions, and more particularly such new compositions that are suitable for the treatment of beet crops, such as sugar beet or fodder beet, that are tolerant to glyhposate herbicide.

Glyphosate is well known as an effective systemic, foliage active (post-emergent) non-selective herbicide. Glyphosate is known to act on various enzyme systems, thus interfering with the formation of amino acids and other endogenous chemicals in treated plants. Due to the relatively low water-solubility of the acid form, glyphosate is mostly sold in a salt form, like the mono-isopropylammonium salt, the ammonium salt, the sodium salt or others. Well known formulated products comprise the active ingredient and a surfactant or a surfactant mixture and possibly other additives, like antifoam agents, antifreeze agents, dyes and other agents known in the art. Reference is also made to the book "The Herbicide Glyphosate", edited by E. Grossbard and D. Atkinson, Butterworth & Co, 1985.

Although glyphosate herbicide is not normally used on crops, because non-selective, recent developments in gene technology have made it possible to genetically transform plants, more particularly crop plants, in order to render them tolerant to glyphosate or derivatives thereof. For instance EP-0 218 571 relates to a cloning or expression vector comprising a gene which encodes EPSPS polypeptide which when expressed in a plant cell confers glyphosate tolerance to plants regenerated from such cell. EP-0 293 358 further relates to the enhancement of the effectiveness of glyphosate-tolerant plants by producing mutant EPSP synthase enzymes which exhibit a lower affinity for glyphosate while maintaining catalytic activity. WO 92/00377 discloses genes encoding a glyphosate oxidoreductase enzyme. The genes are useful in producing transformed plants which degrade glyphosate herbicide and are tolerant to glyphosate herbicide. WO 92/04449 discloses genes encoding class II EPSPS enzymes, which are useful in producing transformed plants that are tolerant to glyphosate herbicide. Such crops can be maintained essentially weed free by application of glyphosate herbicide after crop emergence.

The introduction of several glyphosate tolerant crops, however, may raise the problem of the control of glyphosate tolerant volunteers in another glyphosate tolerant crop, such as it may appear in rotations of successive glyphosate tolerant crops. Obviously, glyphosate herbicide would kill the weeds but not the tolerant volunteers.

Although oilseed rape and beet are not advised to be grown in the same rotation, because of volunteer issues and nematode development, it does regularly occur. In these instances, oilseed rape volunteers develop in the beet crops despite shallow cultivations, rotation and pre-plant destruction methods.

The object of the present invention is to find a solution to the above problem while not excessively increasing the use of chemicals on crop land.

Furthermore, there is a general trend to reduce the applications of chemicals, and it is therefore another object of the present invention to provide improved herbicidal compositions that allow to reduce the amount of chemicals applied while maintaining an acceptable weed control.

According to the invention, there are provided new herbicidal compositions comprising
(i) at least one herbicide selective against beet crops, selected from triflusulfuron, metamitron, chloridazon, lenacil, and clopyralid; and
(ii) glyphosate herbicide;
the respective constituents of the composition being present in amounts such that the composition displays selectivity to the treated crop and exhibits synergistic effects on the weeds and/or glyphosate tolerant volunteers.

Triflusulfuron is the common name for 2-[4-dimethylamino-6-(2,2,2-trifluoroethoxy)-1,3,5-triazin-2-ylcarbamoylsulfa= moyl]-m-toluic acid, and is a sulfonylurea herbicide generally used in the methyl ester form. It is known to control many annual and perennial broad-leaved weeds in sugar beet crops.

Metamitron is the common name for 4-amino-4,5-dihydro-3-methyl-6-phenyl-1,2,4-triazin-5-one. It is known as a herbicide effective against grass and broad-leaved weeds in sugar beet, fodder beet as well as red beet.

Chloridazon is the common name for 5-amino-4-chloro-2-phenylpyridazin-3(2H)-one, and is known as a herbicide selective against sugar beet, fodder beet and beetroot.

Lenacil is the common name for 3-cyclohexyl-1,5,6,7-tetrahydrocyclopentapyrimidine-2,4(3H)-dione. Lenacil is known as a selective herbicide for the control of annual grass and broad-leaved weeds i.a. in sugar beet, fodder beet and beetroot.

Clopyralid is the common name for 3,6-dichloropyridine-2-carboxylic acid, known as a herbicide selective against i.a. sugar beet and fodder beet.

Glyphosate herbicide may be applied in its acid form or as a derivative thereof, preferably a salt, such as the isopropylammonium salt, the sodium salt, or ammonium salt, or mixtures thereof.

Preferably the compositions of the invention further comprise an appropriate surface active component. The surface active component may consist in a single surfactant or in a mixture of different surfactants. Appropriate surfactants may be found in "McCutcheon's Emulsifiers and Detergents", and may advantageously be selected from
- amines, such as ethoxylated alkyl amines, particularly tallow amines, cocoamines, surfactants sold under the tradename Ethomeen, amine oxides, such as surfactants sold under the tradename Empigen 0B;
- quaternary ammonium salts, such as ethoxylated and/or propoxylated quaternary ammonium salts, more particularly surfactants sold under the tradenames Ethoquad, Emcol CC and Dodigen;
- alkylpolyglycoside, alkylglycoside, glucose- and sucrose- esters.

Most preferred are quaternary ammonium salts, such as defined in EP-0 441 764, possibly in admixture with a wetting agent, most preferably alkoxylated sorbitan ester.

Quaternary ammonium salts of particular interest are trimethyl ethoxypolyoxypropyl ammonium chlorides.

It has been noticed that the compositions of the invention show synergistic herbicidal effects on the weeds and, more particularly on the glyphosate tolerant volunteers. This synergistic effect may result in a better weed control, hence less competition between weeds/volunteers and the crop; or for a determined control in a reduced amount of chemicals used.

The compositions of the present invention may be applied as tank mixes of commercially available herbicidal formulations or as a formulated product, such as a water-soluble or dispersible granule, as a water-soluble concentrate diluted in the spray water, or in the form of other formulation types, such as emulsions, encapsulated active ingredient(s) and others.

The compositions of the invention can be applied at a pre-emergent and/or post-emergent stage of the crop to be treated at rates sufficient to control the weeds and glyphosate tolerant volunteers while still selective against the relevant crop. Obviously such rates will depend on climatic conditions, crop stage, weed infestation, stage of weed plants, and other parameters known by the person skilled in the art.

Furthermore, the compositions of the invention may be applied in several successive treatments as is known in the art. The most appropriate timings and treatment intervals will easily be determined by routine experimentation.

### Example 1

Sugar beet plants genetically modified according to the technology disclosed in EP-0 218 571 to render them tolerant to glyphosate were planted according to good agronomical practices at 4.5 cm interplant distance within a row and thinned manually to ensure normal crop stand, according to a randomized block design; plot size : 2.7 x 6 m; 6 rows per plot with an inter-row distance of 0.45 m. Three replications were used for each test.

The field in which the sugar beet plants were planted was heavily infested with volunteer glyphosate tolerant oil-seed rape (5-30 volunteers per square meter).

Chemical treatments were applied when the largest oilseed rape volunteers had reached the 3-5 leaf stage of development.

The following treatments were applied :
- A:: a formulation of 360 g/l (acid equivalent) glyphosate as the isopropylamine salt and 180 g/l surfactant component composed of trimethyl ethoxypolyoxypropyl(8)ammonium chloride and ethoxylated (20) sorbitan ester (80:20);
- B:: a 50% triflusulfuron formulation sold under the tradename Safari;
- C:: a 80% lenacil formulation sold under the tradename Venzar;
- D:: a 70% metamitron formulation sold as Goltix (tradename);

Further treatments are A+B, A+C and A+D at the same rates of individual components as each of those when used alone.

The compositions were applied at a water volume of approximately 200 l/ha at a 2 bar pressure.

Table I hereafter shows the present biovolume reduction observed on glyphosate tolerant oilseed rape at 7 DAT (Days After Treatment), 14 DAT and 21 DAT.

The control treatment shows that glyphosate herbicide applied at 720 g a.e./ha has a zero effect on the glyphosate tolerant oilseed rape volunteers. It also appears from Table I that the compositions of the invention show synergistically increased efficacy compared to triflusulfuron, lenacil, and metamitron, respectively, each taken alone at the same rate.

Similar effects were noticed on the other weeds. It is also noteworthy that the synergistic effects were visible rather rapidly, that is already within 1 week after treatment.

**Table 1**

| % Biovolume reduction | | | | |
|---|---|---|---|---|
| Treatment | Rate | 7DAT | 14DAT | 21DAT |
| A | 2 l/ha | 0 | 0 | 0 |
| B | 30 g/ha | 25 | 62 | 60 |
| A + B | 30 g + 2 l/ha | 77 | 83 | 85 |
| C | 0.1 kg/ha | 10 | 0 | 0 |
| A + C | 0.1 kg + 2 l/ha | 15 | 4 | 2 |
| D | 2 kg/ha | 23 | 25 | 14 |
| A + D | 2 kg + 2 l/ha | 73 | 78 | 75 |

## Claims

1. A herbicidal composition comprising :
(i) at least one herbicide selective against beet crops, selected from triflusulfuron, metamitron, chloridazon, lenacil, and clopyralid; and
(ii) glyphosate herbicide,
the respective constituents of the composition being present in amounts such that the composition displays selectivity to the treated crop and exhibits synergistic effects on the weeds and/or glyphosate tolerant volunteers.

2. The herbicidal composition of Claim 1 wherein glyphosate is contained in its acid form or as a derivative thereof, preferably a salt, such as the isopropylammonium salt, the sodium salt, or ammonium salt, or mixtures thereof.

3. The herbicidal composition of Claim 1 or 2 further comprising an appropriate surface active component.

4. The herbicidal composition of Claim 3 wherein the surface active component is a single surfactant or a mixture of different surfactants.

5. The herbicidal composition of any of Claims 3 or 4 wherein the surfactant is selected from :
- amines, such as ethoxylated alkyl amines, particularly tallow amines, cocoamines, surfactants sold under the tradename Ethomeen, amine oxides, such as surfactants sold under the tradename Empigen 0B;
- quaternary ammonium salts, such as ethoxylated and/or propoxylated quaternary ammonium salts, more particularly surfactants sold under the tradenames Ethoquad, Emcol CC and Dodigen;
- alkylpolyglycoside, alkylglycoside, glucose- and sucrose- esters.

6. The herbicidal composition of Claim 5 wherein the surfactant is a quaternary ammonium salt, such as defined in EP-0 441 764, possibly in admixture with a wetting agent, most preferably alkoxylated sorbitan ester.

7. Use of the herbicidal composition of any of Claims 1-6 to control, in addition to the weed infestation, glyphosate tolerant volunteers in another glyphosate tolerant crop.

8. Use according to Claim 7 wherein the other glyphosate tolerant crop is a beet crop, such as sugar beet or fodder beet.
